# EUROPEAN PATENT SPECIFICATION

(11) **EP 1 518 309 B1**
(45) Date of publication and mention of the grant of the patent: **15.08.2007**
(21) Application number: 03734423.1
(22) Date of filing: 05.06.2003
(51) Int. Cl.: H02G 15/18

(54) **SLIDINGLY DETACHABLE CORE MEMBER AND COLD SHRINK TUBE UNIT HAVING THE SAME**
GLEITENDES LOSTRENNBARES KERNELEMENT UND KALTSCHRUMPFROHRVORRICHTUNG MIT EINEM SOLCHEN ELEMENT
ELEMENT CENTRAL DEMONTABLE PAR GLISSEMENT ET UNITE TUBULAIRE RETRECISSABLE A FROID POURVUE DE CELUI-CI

(30) Priority: 03.07.2002 JP 2002194936
(43) Date of publication of application: 30.03.2005
(73) Proprietor: 3M Innovative Properties Company, St. Paul, MN 55133-3427 (US)
(72) Inventor: SUZUKI, Shigeru, Machida, Tokyo 194-0012 (JP); INOUE, Mitsuharu, Sagamihara, Kanagawa 228-0828 (JP); NAKAMURA, Tsunehisa, Machida, Tokyo 194-0212 (JP)
(74) Representative: Hilleringmann, Jochen
(86) International application number: PCT/US2003/017769
(87) International publication number: WO 2004/006403

(56) References cited:
- EP-A- 0 917 269
- EP-A- 1 037 352

## Description

The present invention relates to a slidingly detachable core member. More particularly, the present invention is concerned with a cold shrink tube unit having the slidingly detachable core member.

### [Prior Art]

A cold shrink tube unit includes an elastic tube member having an opening end, and a hollow cylindrical core member that is inserted into a region of a predetermined length (which shall be called a seal region) through the opening end of the elastic tube member but remains removable. Moreover, the core member holds the seal region in an elastically expanded state. This type of cold shrink tube unit has been utilized in various fields as a sheathing unit with which an object can be sheathed quickly. For example, a cold contractile sheathing tube has been used to sheathe wires bared in a joint of cables (covered wires) or a joint of a cable and another conducting terminal member for the purpose of damp-proofing, electrical insulation, or mechanical protection. Herein, a hollow cylindrical plastic core member of a length exceeding the overall length of the joint is used to hold a seal region of an elastomer tube member in the elastically expanded state in advance. Thereafter, when the elastomer tube member is attached to the joint, the core member is removed to allow the seal region to elastically contract. Thus, the seal region is brought into close contact with the peripheries of the cables. Two types of cold shrink tube units are available. One type has a short core member inserted in a seal region that corresponds to a desired portion of an elastic tube member near an opening end of the elastic tube member, and a type having an elongated core member inserted in a seal, region that corresponds to the overall length of the elastic tube member.

It is known to use a core member in the cold shrink tube unit that has a weakening line, that is, a groove continuously spirally formed over the overall length in the axial direction of a hollow cylindrical body section. The core member can be torn along the groove in the form of a ribbon using one end of the groove at an axial end of the body section as a tearing start end. This tearing detachment type core member falls into a type having a cylindrical core body produced by spirally winding an elongated plastic ribbon and joining the side edges of adjoining single-turn portions of the ribbon by performing welding or the like (see JP-A-10-513337 and WO-A-99/08355), and a type forming a spiral cutting line over the whole of a plastic core body molded in a hollow cylindrical form (see JP-U-2-1816). In EP-A-1 037 352 a core member is described having weakening lines extending longitudinally along the cylindrical wall of the hollow core member.

Moreover, another known type of core member is characterized in that a sliding member is interposed between a hollow cylindrical core body and a seal region of an elastic tube member. Herein, the sliding facilitating operation of the sliding member facilitates pulling out of the core body in the axial direction. As for the slidingly detachable core member, three types have been suggested. In one instance (see JP-A-7-123561), a sliding member is included independently of a hollow cylindrical core body and the sliding member is left in the seal region after the core body is pulled out. In another instance (see JP-A-11-951 and JP-A-11-218267), a sliding member is included independently of a hollow cylindrical core body, and the sliding member is removed during pulling out of the core body. In a further instance (see JP-A- 7-123561 and JP-A-9-254261), a flexible sliding member is integrated with one axial end of a hollow cylindrical core body and can be turned over to lie on the outer circumferential surface of the body section. A similar core and sliding member combination is disclosed in EP-A-0 917 269.

Other types of core members include the one disclosed in JP-A-11-115049 in which a plurality of weakening lines is extended in the axial direction of a hollow cylindrical core body. The core body is divided along the weakening lines over a predetermined length. A plurality of sections resulting from the division is turned inward toward the core body and extended out of the other end of the core body. In this state, the core body is inserted in a seal region of an elastic tube member. In a type of core member disclosed in JP-A-8-508633, a sliding member is interposed between a hollow cylindrical core member and a seal region covering the entire length of an elastic tube member. An extension of the sliding member is turned inward toward the core body and extended out of the other end of the core body. When the elastic tube member is mounted on an object to be sheathed, the turned part of the sliding member pushes the object into the core body. When the extension of the sliding member is pulled out through the other end of the core body, the core body is put on the object. Consequently, the elastic tube member is turned inside out and attached to the object.

### Problems to be Solved by the Invention

As far as the aforesaid cold shrink tube unit having the tearing detachment type core member is concerned, the longer the entire axial directional length of the seal region of the elastic tube member, that is, the longer the core member is, the more time is required to remove the core member. Moreover, when the cold shrink tube unit is mounted on an object to be sheathed (for example, a joint of cables), the ribbon-like section of the body section of the core member torn along the spiral groove tends to entwine about an object while remaining spiral. In this case, the core body must be torn apart while the ribbon-like section is unentwined. Thus, removing the core member is time-consuming and labor-intensive. In particular, when the cold shrink tube unit is mounted on a joint of conducting (active) cables, the core member must be removed using a remote-control appliance (or a magic hand) for the purpose of preventing an electrical shock. In this case, the removal accompanied by unentwining of the ribbon-like section is hard to do. Furthermore, once the core member is torn, it cannot be reused as it is, and is therefore disposed of or collected and recycled. This becomes a factor in preventing reduction of material costs and promotion of resource saving.

In contrast, as far as the aforesaid cold shrink tube unit having the slidingly detachable core member is concerned, the core body can be easily pulled out from the seal region of the elastic tube member in an axial direction. The problem of the ribbon-like section entwining about an object to be sheathed can be avoided. Moreover, the core member pulled out from the seal region is reusable as it is. This contributes to reduction of material costs and promotion of resource saving. However, the structure having the sliding member independent of the core body requires a plurality of parts. Therefore, assembling components of the cold shrink tube unit is complex and the cost of manufacturing tends to rise. In contrast, the structure having the sliding member integrated with the core body has the merit that the assembling of the components of the cold shrink tube unit becomes simpler owing to the reduced number of parts. However, in the core member disclosed in JP-A-9-254261, the sliding member is composed of a plurality of strips. This brings about a fear that the ability of the sliding member to facilitate sliding of the core body in the seal region of the elastic tube member may be insufficient. Moreover, the core member disclosed in JP-A-7-123561 is produced by rolling a rectangular sheet member, into which the core member and sliding member are integrated, in a hollow cylindrical form. The problem to be solved is therefore how to ensure the core body rigidity, which permits retention of the seal region of the elastic tube member in a predetermined expanded state, without hindrance to the rolling.

Accordingly, an object of the present invention is to provide a slidingly detachable core member having a sliding section integrally connected with a core body, capable of easily ensuring the rigidity of the core body sufficient for holding an objective seal region of an elastic tube member in a predetermined expanded state, without deteriorating the ability of the sliding section to facilitate the sliding of the core body inside the seal region.

Another object of the present invention is to provide a cold shrink tube unit having a slidingly detachable core member, capable of simplifying the assembling process of the cold shrink tube unit, and which includes a core member having the rigidity sufficient for holding a seal region of an elastic tube member in a predetermined expanded state, without deteriorating a mounting operability of the unit over an object to be sheathed.

### Means for Solving the Problems

In order to accomplish the above objects, one aspect of the invention provides a slidingly detachable core member as defined in claim 1 and comprising a body section defining a hollow cylinder and a sliding section integrally connected with one axial end of said body section, said sliding section having flexibility permitting it to be turned over and laid on an outer circumferential surface of said body section, characterized in that said body section includes a plurality of plate-like portions capable of being combined with each other to form said hollow cylinder; and each of said plate-like portions is individually provided with said sliding section in an adjacent manner.

The plate-like portions of the slidingly detachable core member may comprise mutually independent parts.

The body section may further include a joint portion pivotably connecting said plate-like portions with each other, said plate-like portions mutually adjoining in a form of said hollow cylinder.

The joint portion may be structured to deform under an external force to allow said mutually adjoining plate-like portions to be pivoted.

The plate-like portions may be provided with engagable end faces capable of being engaged with each other in a form of said hollow cylinder. The body section may further include reinforcing portions formed in peripheral end regions, including said engagable end faces, of said plate-like portions for holding said plate-like portions in a form of said hollow cylinder against an external force.

The reinforcing portions may be formed in said engagable end faces, adapted to be engaged with each other, of said mutually adjoining plate-like portions, and may include concave and convex configurations detachably fitted with each other.

The slidingly detachable core member may further comprise fastening sections that releasably fasten said sliding section, and can be turned over and laid on said outer circumferential surface of said body section, on said outer circumferential surface.

Another aspect of the invention provides a cold shrink tube unit as defined in claim 8 and comprising an elastic tube member with an opening end and a hollow cylindrical core member removably provided inside a seal region of said elastic tube member, having a predetermined length from said opening end, to hold said seal region in an elastically expanded state, wherein said core member comprises said slidingly detachable core member as set forth above; and said slidingly detachable core member is provided inside said seal region with said sliding section turned over and laid on said outer circumferential surface of said body section and interposed between said body section and said seal region of said elastic tube member.

### Brief Description of the Drawings

Fig. 1 is a perspective cutaway showing a cold shrink tube unit in accordance with an embodiment of the present invention.
Fig. 2 is an end view of the cold shrink tube unit shown in Fig. 1.
Fig. 3 is a perspective view showing a core member employed in the cold shrink tube unit in accordance with the embodiment of the present invention which is shown in Fig. 1.
Fig. 4 is a perspective view showing the core member shown in Fig. 3 in a state in which the core member is incorporated in the cold shrink tube unit shown in Fig. 1.
Fig. 5 (a) to (f) are enlarged perspective views showing various examples of a sliding section that can be adopted to the core member shown in Fig. 3.
Fig. 6 is an illustration of disassembled parts of a core member employed in the embodiment of the present invention; (a) is a perspective view of the entire core member, and (b) is a sectional view of a body section.
Fig. 7 is an illustration of the developments of a core member employed in another embodiment of the present invention; (a) is a perspective view showing the entire core member, and (b) is a sectional view of a body section of the core member.
Fig. 8 (a) to (g) are partially enlarged sectional views showing various modifications of a joint portion included in the body section of the core member shown in Fig. 7.
Fig. 9 (a) and (b) are partially enlarged perspective views showing various modifications of a reinforcing portion included in the body section of the core member shown in Fig. 7.
Fig. 10 (a) is a perspective view showing a modification of the core member shown in Fig. 6, and (b) is a perspective view showing a modification of the core member shown in Fig. 7.
Fig. 11 (a) to (f) are sectional views showing various modifications of the body section of the core member shown in Fig. 7 in a development state and a completed state.
Fig. 12 (a) and (b), are sectional views showing other modifications of the body section of the core member shown in Fig. 7 in a development state, an in-progress state, and a completed state.
Fig. 13 is a perspective view showing other modification of the core member shown in Fig. 6.
Fig. 14 is a perspective view showing the core member shown in Fig. 13 in a state in which the core member is incorporated in the cold shrink tube unit shown in Fig. 1.
Fig. 15 (a) to (c), are schematic sectional views showing a procedure of removing the core member shown in Fig. 13 from a cold shrink tube unit.
Fig. 16 (a) to (c) are schematic sectional views showing a procedure of removing other modification of the core member from a cold shrink tube unit.

### Mode for Carrying Out the Invention

An embodiment of the present invention will be described with reference to appended drawings below. In all the drawings, common reference numerals are assigned to corresponding components.

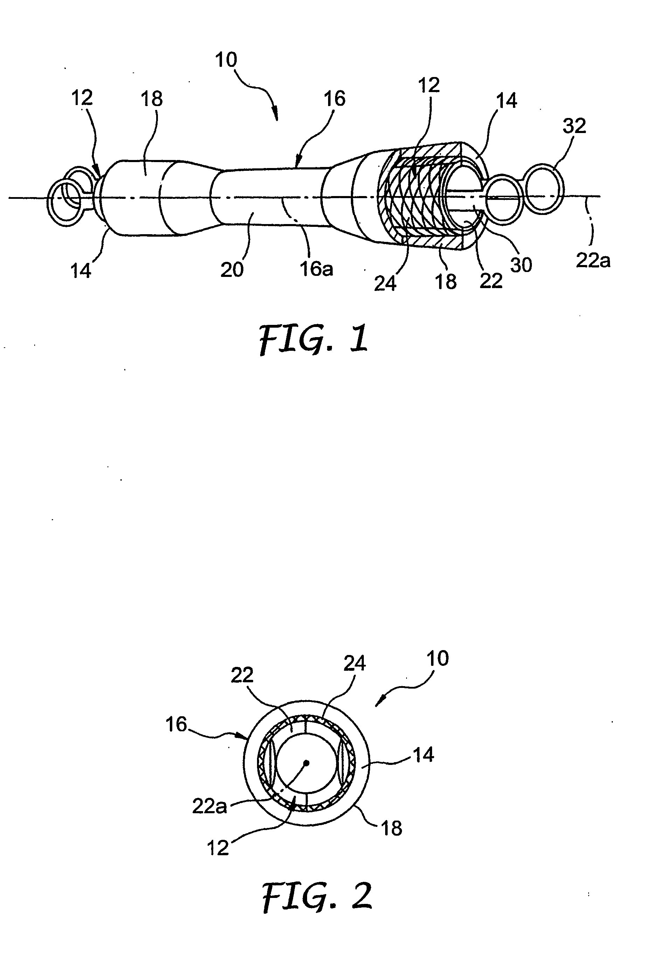

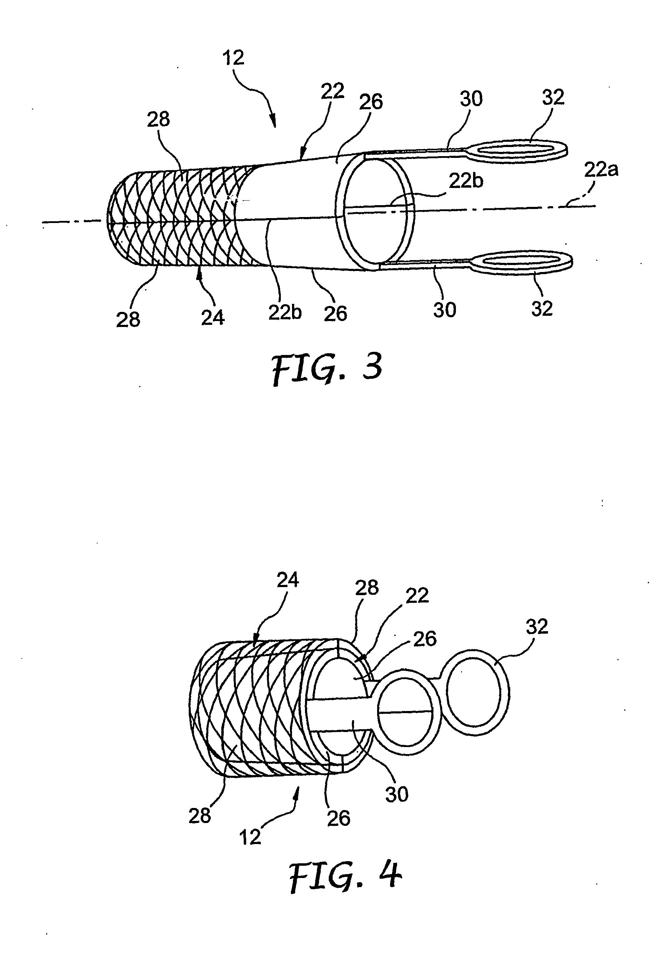

Fig. 1 is a perspective cutaway showing a cold shrink tube unit 10 in accordance with an embodiment of the present invention. Fig. 2 is an end view of the cold shrink tube unit 10. Fig. 3 is a perspective view showing a core member 12 employed in the cold shrink tube unit 10 in accordance with an embodiment of the present invention. Fig. 4 is a perspective view showing the core member 12 in a state in which the core member 12 is inserted in the cold shrink tube unit 10. The cold shrink tube unit 10 has a straight tube that has two opening ends and is adopted as a cold contractile sheathing tube that sheathes and protects a straight joint of, for example, cables (or covered wires). However, the application of the cold shrink tube unit 10 is not limited to the sheathing tube.

The cold shrink tube unit 10 consists mainly of an elastic tube member 16 and a pair of hollow cylindrical core members 12. The tube member 16 is hollow and cylindrical and has opening ends 14 in the longitudinal direction thereof. The core members 12 are inserted in seal regions 18 of a predetermined length through both the opening ends 14 of the elastic tube member 16 while being removable. The core members 12 hold the seal regions 18 in an elastically expanded state. The elastic tube member 16 has an intermediate region 20 integrated concentrically with the seal regions 18. The inner diameter of each seal region 18 in an unloaded state in which the seal region does not have the core member 12 inserted therein is smaller than the inner diameter of the intermediate region 20. When the cold shrink tube unit 10 is mounted on an object to be sheathed (for example, a joint of cables) with the core members 12 removed, the elastic tube member 16 has the seal regions 18 thereof brought into close contact with the outer circumferential surface of the object due to an elastically restoring force. The intermediate region 20 of the elastic tube member 16 sheathes a desired portion of the object so as to keep the desired portion moistureproof, electrically insulated, or mechanically protected.

The elastic tube member 16 is made of an elastomer that has an electrically insulating property and flexibility. Preferably, the seal regions 18 and intermediate region 20 are produced as a united body section using the same material by performing injection molding. Preferable materials to be made into the elastic tube member 16 include an ethylene rubber (especially EPDM), a chloroprene rubber, a butyl rubber, a silicone rubber, a natural rubber, a fluorocarbon rubber, and a silicone denatured EPDM. In particular, when the cold shrink tube unit 10 is adopted as a sheathing tube for sheathing a joint of cables, at least the seal regions 18 of the elastic tube member 16 should advantageously exhibit a permanent elongation of, preferably, 40 % or less, or more preferably, 15 % or less. The permanent elongation should be measured according to a method complying with the Japanese Industrial Standard (JIS) K6301 (100°C, 22 hours) (refer to JP-A-7-57798).

Each core member 12 has a hollow cylindrical body section 22. The core member 12 is inserted in the seal region 18 with the center axis 22a of the body section 22 aligned with the center axis 16a of the elastic tube member 16. The inner diameter of the core member 12 is much larger than the outer diameter of an object to be sheathed (for example, a joint of cables) using the cold shrink tube unit 10. The core member 12 is rigid enough to hold the seal region 18 of the elastic tube member 16 in an elastically expanded state in which the seal region 18 is expanded to have a predetermined diameter while withstanding the elastically restoring force exerted by the seal region 18.

The core member 12 employed in the embodiment of the present invention is of a slidingly detachable form. The core member 12 includes the body section 22 that forms a hollow cylinder and a sliding section 24. The sliding section 24 is integrated with one axial end of the body section 22 and is so flexible as to turn over to lie on the outer circumferential surface of the body section 22. The body section 22 has a plurality of plate-like portions 26 that is assembled to form the hollow cylinder. The sliding section 24 includes a plurality of structural parts 28 that has a porous surface or a concave or convex surface. The structural parts 28 are formed adjacently to the plate-like portions 26.

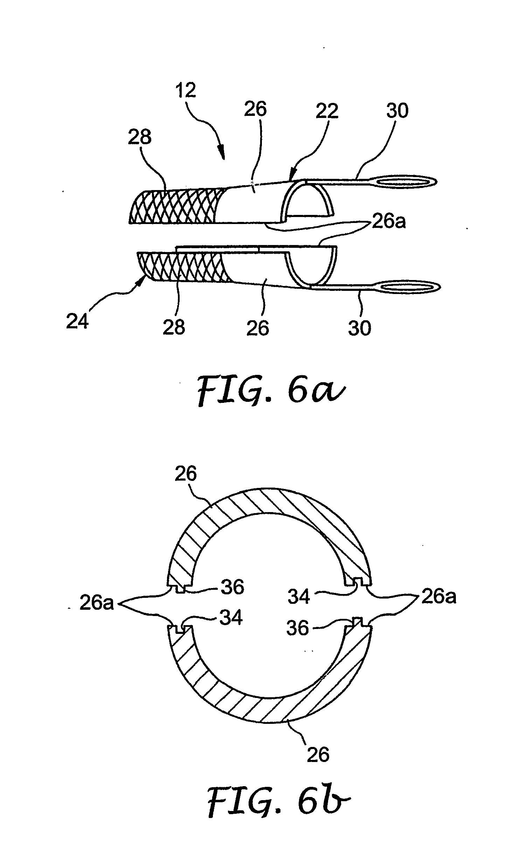

In the illustrated embodiment, the body section 22 of the core member 12 includes a pair of plate-like portions 26 whose sections are shaped like arcs that correspond to the bisections of a hollow cylinder cut along a division line 22b parallel to the center axis 22a. Each strip 26 has a pair of engagable end faces 26a (see Fig. 6) that can be engaged with the engagable end faces of the partner plate-like portion 26. The plate-like portion 26 is mated with the partner plate-like portion 26 with the engagable end faces 26a brought into close contact with the engagable end faces of the partner plate-like portion 26. Consequently, the pair of plate-like portions 26 constitutes the body section 22 that is rigid enough to maintain the hollow cylindrical form while withstanding a predictable external force.

The pair of structural parts 28 constituting the sliding section 24 has substantially the same arc sections as the plate-like portions formed adjacently to the structural parts. However, the structural parts 28 are much thinner than the plate-like portions 26 and exhibit given flexibility synergistically to their porous or irregular surface. Furthermore, when the structural parts 28 are turned over to lie on the peripheries of the plate-like portions 26, they exhibit a given sliding property (that is, a frictional force alleviating ability) relative to the peripheries of the plate-like portions 26 owing to their porous or irregular surface.

The core member 12 has the sliding section 24 thereof turned over, as shown in Fig. 4, to lie on the outer circumferential surface of the body section 22. The core member 12 is inserted in the seal region 18 of the elastic tube member 16 with the sliding section 24 thereof interposed between the body section 22 and the seal region 18 (Fig. 1). At this time, the core member 12 is placed in the seal region 18 so that the junction of the body section 22 and sliding section 24 will be located inward the elastic tube member 16, that is, near the junction of the seal region 18 and intermediate region 20. In this state, the sliding section 24 of the core member 12 produces feeble frictional force relative to the body section 22 of the core member 12 due to its porous or irregular surface. Thus, the sliding section 24 of the core member 12 minimizes resistance occurring when the body section 22 slides within the seal region 18 in the axial direction thereof.

The core member 12 further includes a pair of pull tabs 30 that is integrated with the other axial end of the body section 22 opposite to the sliding section 24 and isolated from the sliding section 24. The pull tabs 30 are attached to the pair of plate-like portions 26 respectively. The pull tabs 30 have hook rings 32 formed as the distal ends thereof and extended in the axial direction of the body section 22. When the core member 12 is properly inserted in the seal region 18 of the elastic tube member 16, the pull tabs 30 extend outward from the seal region 18, and the hook rings 32 is isolated from the elastic tube member 16.

The core member 12 is die-molded, or preferably, injection-molded using a resin material that is superior in rigidity and self-lubrication, such as, polypropylene, polyethylene, or polyamide (nylon). During the die molding, each plate-like portion 26 of the body section 22, an associated structural part 28 of the sliding section 24, and an associated pull tab 30 are molded as a united body section using the same resin material. Thereafter, the plate-like portions 26 are as mentioned previously assembled in order to construct the hollow cylindrical body section 22. Thus, the core member 12 is produced.

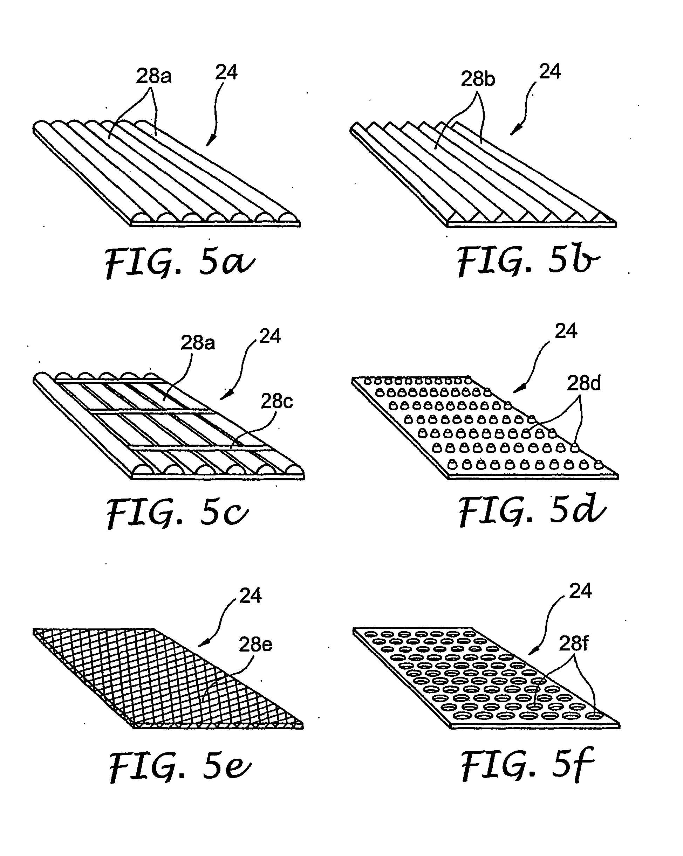

As the sliding section 24 of the core member 12 that can be molded using a die assembly, any of various structures like those shown in Fig. 5 can be adopted. For example, (a) a structure having a plurality of semi-cylinder-shaped ribs 28a extended parallel to one another may be adopted. Otherwise, (b) a structure having a plurality of triangular prism-shaped ribs 28b extended parallel to one another may be adopted. Otherwise, (c) a structure having a plurality of semi-cylinder-shaped ribs 28a and a plurality of beams 28c traversing the ribs may be adopted. Otherwise, (d) a structure having a plurality of small projections 28d, (e) a structure having a lattice 28e, or (f) a structure having a plurality of through holes 28f may be adopted. The sliding section 24 having any of the structures (a) to (d) is turned over with the irregular surface thereof having the ribs or projections opposed to the outer circumferential surface of the body section 22, thus exerting a given sliding ability relative to the body section 22.

In the core member 12 included in the embodiment of the present invention, the sliding section 24 divided into the structural parts 28 can be molded using a die assembly so that the structural parts 28 will have a desired porous or irregular surface. A desired sliding facilitating ability to allow the body section 22 to smoothly slide within the seal region 18 of the elastic tube member 16 that is applied to an object to be sheathed can be readily and reliably ensured to the sliding section 24. Moreover, the body section 22 divided into the plate-like portions 26 can be molded using a die assembly so that the plate-like portions will be shaped like the predetermined divisions of a cylinder. Consequently, rigidity permitting retention of the seal region 18 in a predetermined expanded state can be readily and accurately ensured to the body section 22.

In the cold shrink tube unit 10 having the foregoing core member 12, since the core member 12 has the sliding section 24 integrated with the body section 22, the assembling of the components of the cold shrink tube unit 10 can be simplified. Furthermore, since the sliding section 24 exerts the superb ability to facilitate sliding of the body section 22, the core member 12 can be quickly removed from the seal region 18 of the elastic tube member 16 with feeble tensile force. Consequently, the elastic tube member 16 can be readily mounted on an object to be sheathed. Moreover, the core member 12 is rigid enough to hold the seal region 18 of the elastic tube member 16 in a predetermined expanded state. Therefore, the cold shrink tube unit 10 that is unused can be held ready to use on a stable basis.

In particular, when the cold shrink tube unit 10 is mounted on a joint of cables, a remote-control appliance (magic hand) may be used to remove the core member 12 in efforts to prevent an electrical shock. Even in this case, the remote-control appliance hooking the hook rings 32 of the pull tabs 30 included in the plate-like portions 26 of the body section 22 should merely be moved straight in order to pull the pull tabs 30 linearly. Thus, the core member 12 can be quickly removed from the seal region 18 of the elastic tube member 16 owing to the sliding facilitating ability of the sliding section 14. Furthermore, the removed core member 12 can be reused as it is to produce a new cold shrink tube unit 10. This contributes to reduction in material costs and promotion of resource saving.

Among the aforesaid components, the body section 22 of the core member 12 may, as shown in Fig. 6(a), include a pair of plate-like portions 26 that is realized with parts that are mutually independent, that is, completely separated from each other. Even if this structure is adopted, the plate-like portions 26 are assembled with the pair of engagable end faces 26a of one plate-like portion 26 brought into close contact with the engagable end faces 26a of the partner plate-like portion 26. This results in the body section 22 capable of holding the hollow cylindrical form while withstanding predictable external force.

As shown in Fig. 6(b), advantageously, a concave/indented part 34 and a convex/protruding part 36 that are meshed together while being able to be freed from each other are formed in the two pairs (at least one pair) of engagable end faces 26a of the plate-like portions 26 that are engaged with each other. The concave/indented part 34 and convex/protruding part 36 operate as positioning elements that assist in assembling the pair of plate-like portions 26 in place. Moreover, the concave/indented part 34 and convex/protruding part 36 operate as reinforcing portions that hold the plate-like portions 26 in the hollow cylindrical form against an external force. The concave/indented part 34 and convex/protruding part 36 can be molded as the integral parts of the plate-like portions 26 of the body section 22 during die molding of the core member 12.

In the foregoing structure including the body section 22 that has the plate-like portions completely separated from each other, the plate-like portions 26, the structural parts 28, or the pull tabs 30 preferably has the same shape and dimensions. In this case, one kind of die assembly is needed in order to produce a plurality of subassemblies each including the plate-like portion 26, structural part 28, and pull tab 30. The subassemblies having the same shape are assembled in order to produce the core member 12. Thus, the cost of the die assembly can be reduced effectively.

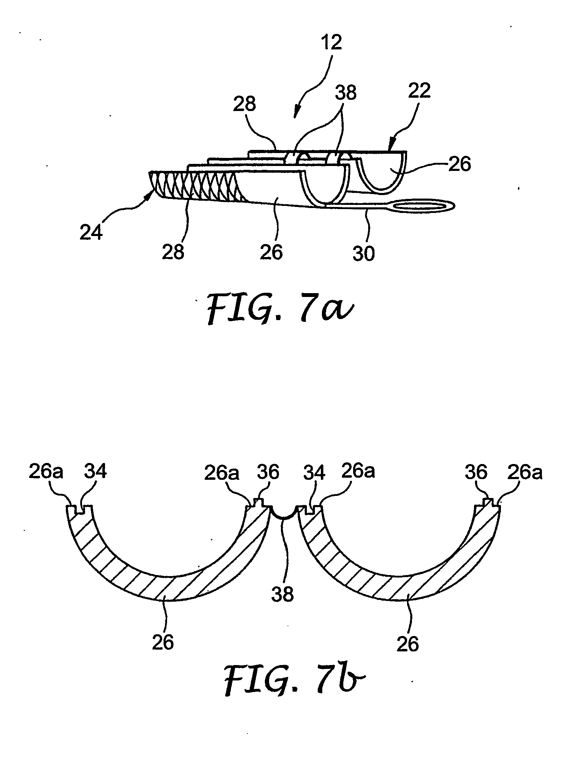

Otherwise, the body section 22 of the core member 12 may, as shown in Fig. 7(a), include a pair of plate-like portions 26 that are joined to be mutually turnable with joint portions 38 between them. The joint portions 38 are mutually adjacently fixed to the engagable end faces 26a of the plate-like portions 26 that are engaged with each other. The joint portions 38 joining the adjoining plate-like portions 26 are much thinner than they are. The joint portions 38 deform with an external force so as to enable the adjoining plate-like portions 26 that are joined to turn to meet each other. In the illustrated example, the joint portions 38 are formed as a pair of hinge elements 38 that are dispersed at desired positions in the longitudinal direction of the plate-like portions 26. The joint portions 38 are molded as integral parts of the pair of plate-like portions 26 of the body section 22 using the same material as the material made into the plate-like portions 26 during die molding of the core member 12.

Even in this structure, as shown in Fig. 7(b), advantageously, the concave/indented part 34 and convex/protruding part 36 that are meshed with each other while being able to free from each other should be formed in the two pairs (at least one pair) of engagable end faces 26a of the plate-like portions 26 that are engaged with each other. The concave/indented part 34 and convex/protruding part 36 operate as positioning elements and reinforcing portions as mentioned above. Consequently, the plate-like portions 26 are assembled with the two pairs of engagable end faces 26a brought into close contact with each other. This results in the body section 22 capable of holding the hollow cylindrical form while withstanding the expected external force. In the illustrated example, one of the plate-like portions 26 of the body section 22 has the pull tab 30. Even in this structure, the core member 12 can be reliably removed from the seal region 18 of the elastic tube member 16 owing to the operation of the joint portions 38 that join the plate-like portions.

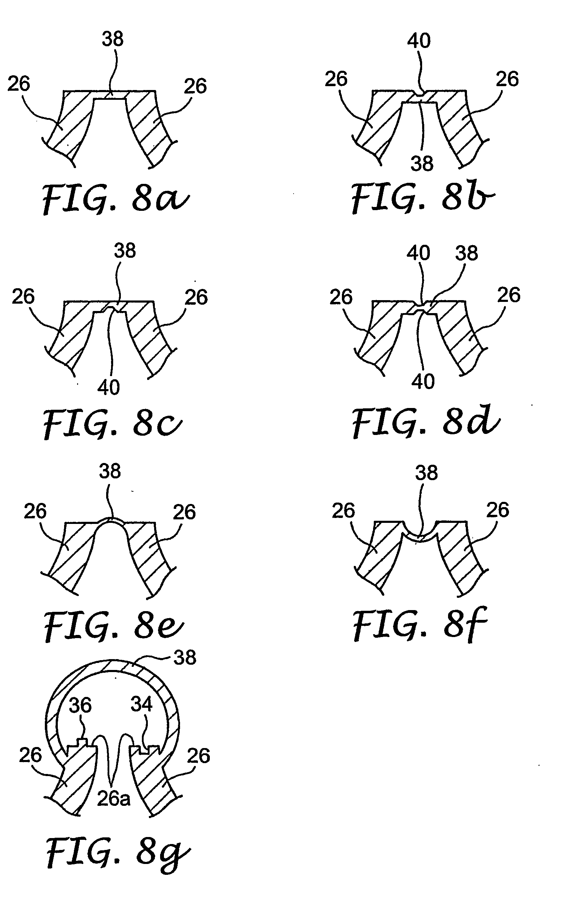

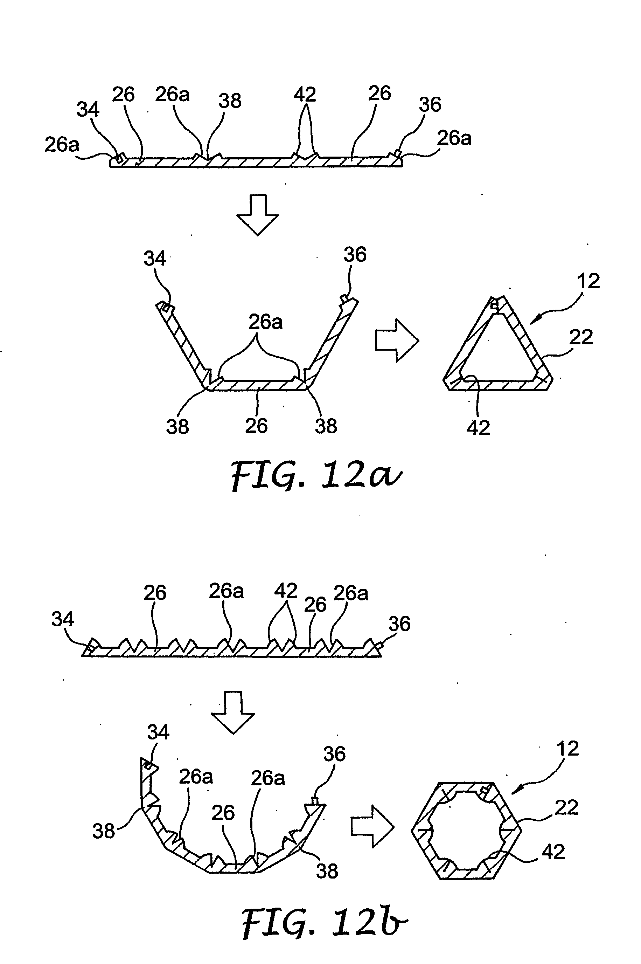

In the structure having the foregoing body section 22 having the plate-like portions joined, the efficiency in producing the core member 12 by assembling the plate-like portions 26 improves. Incidentally, the joint portion 38 embodied as the hinge element 38 may have various shapes such as, as shown in Fig. 8, (a) a flat plate, (b) a flat plate having a dent 40 formed in the inner surface, (c) a flat plate having a dent 40 formed in the outer surface, (d) a flat plate having dents 40 in opposite surfaces, (e) a curved plate made convex inward, (f) a curved plate made convex outward, which are provided along the outer sides of the plate-like portions in the form of a body section, and (g) a curved plate extending to cover the engagable end faces 26a, which is provided along the inner sides of the plate-like portions in the form of a body section. When the hinge element 38 has the dent 40, a position in the hinge element 38 at which the hinge element is folded is specified. This is advantageous because when the plate-like portions 26 are assembled, they can be easily positioned relatively to each other. Incidentally, the joint portion 38 is not limited to the hinge element but may be realized with a crease that is a thinner part extended over the entire axial directional length of the body section 22 (see Fig. 12).

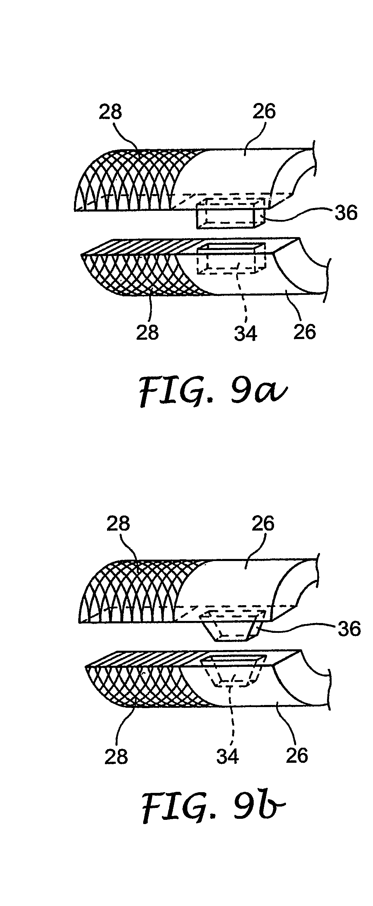

In either the structure having the plate-like portions completely separated from each other or the structure having the plate-like portions joined, the concave/indented part 34 and convex/protruding part 36 that operate as reinforcing portions of the body section 22 may have any of various shapes. Specifically, the concave/indented part 34 and convex/protruding part 36 may be shaped like a rectangular parallelepiped as shown in Fig. 9(a), like a decapitated cone as shown in Fig. 9(b), or like any other shape that is not shown. When the concave/indented part 34 and convex/protruding part 36 are shaped like a rectangular parallelepiped, if a tight fitting structure is adopted, the plate-like portions 26 engaged with each other exert satisfactory fixing strength. Moreover, the concave/indented part 34 and convex/protruding part 36 each of which is shaped like a decapitated cone are advantageous in lightening the labor of engaging the plate-like portions 26.

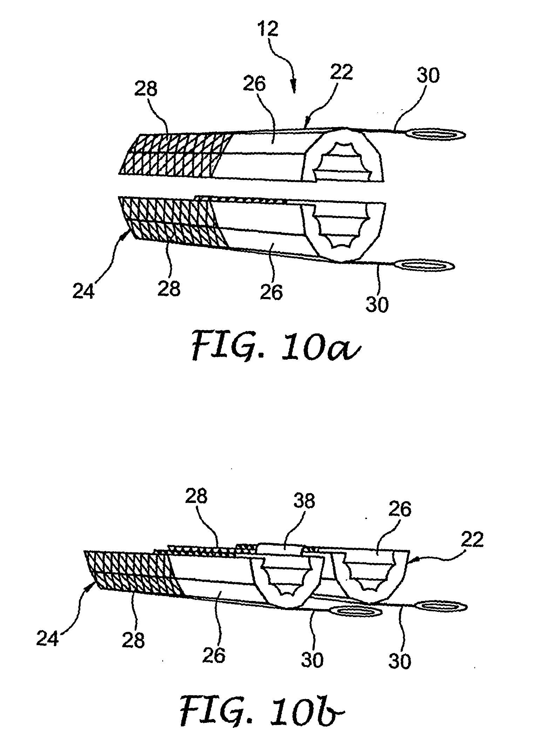

In either of the foregoing structures, the body section 22 and sliding section 24 of the core member 12 may be formed not only like a hollow cylinder but also like a hollow polygonal prism as shown in Fig. 10(a) and Fig. 10(b). The adoption of a polygonal prism has, as described later, the merit that a die assembly is simplified and the rigidity of the core member 12 improves.

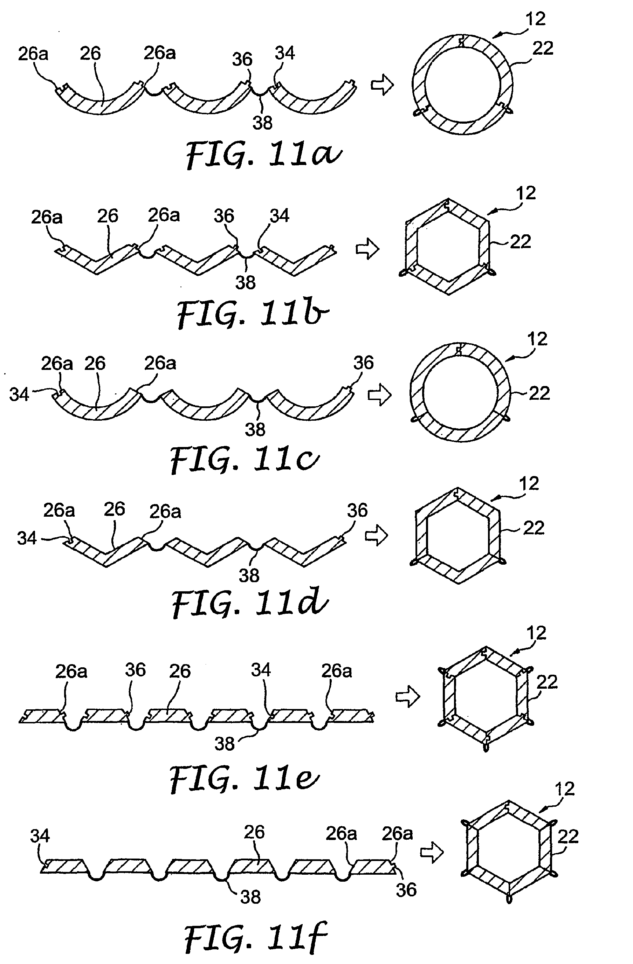

In either of the foregoing structures, the body section 22 of the core member 12 is not limited to the structure having the plate-like portions 26 that are shaped like the bisections of a hollow cylinder. Alternatively, as shown in Fig. 11, the body section 22 of the core member 12 may be composed of plate-like portions 26 that are shaped like three or more equal parts of a hollow cylinder. Fig. 11(a) shows the body section 22 composed of the plate-like portions 26 that are shaped like the trisections of a hollow cylinder. Referring to Fig. 11(a), the body section 22 is developed and completed by joining the adjoining plate-like portions 26, which constitute the hollow cylinder, with the hinge elements 38 among them while permitting them to turn. Fig. 11(b) shows the body section 22 composed of the plate-like portions 26 that are shaped like the trisections of a hollow regular hexagonal prism. In Fig. 11(b), the body section 22 is developed and completed by joining the plate-like portions 26 with the hinge elements 38 among them while permitting them to turn. In either of the bodies 22, the concave part 34 and convex part 36 that are meshed together while being permitted to be freed from each other may be formed in each of three pairs of engagable end faces 26a included in three plate-like portions 26. Otherwise, as shown in Fig. 11(c) and Fig. 11(d), the concave part 34 and convex part 36 may be formed in only one pair of engagable end faces 26a that is mated with each other and that is included in the plate-like portions 26 lying at both ends of the development of the body section 22.

Fig. 11(e) and Fig. 11(f) show the bodies 22 each having the plate-like portions 26 that are shaped like six equal parts of a hollow regular hexagonal prism divided at its apices. In Fig. 11(e) and Fig. 11(f), the body section 22 is developed and completed by joining the adjoining plate-like portions 26, which constitute the hollow hexagonal prism, with the hinge elements 38 among them while permitting them to turn. In this case, the concave part 34 and convex part 36 that are meshed together while being permitted to be freed from each other may be formed in six pairs of engagable end faces 26a which are included in all the plate-like portions and which is engaged with one another (Fig. 11(e)). Otherwise, the concave part 34 and convex part 36 may be formed in only one pair of engagable end faces 26 which is engaged with each other and which is included in the plate-like portions lying at both ends of the development of the body section 22 (Fig. 11(f)). This structure has the merit that since a plurality of flat-plate plate-like portions 26 should merely be produced, a die assembly is simplified. In these arrangements shown in Fig. 11, the joint portions 38 project outward from the body section 22 in an assembled state of the body section 22, while the joint portions 38 as shown in Fig. 8(g), if they are provided, will project inward from the assembled body section.

Fig. 12 shows the core member 12 having creases 38, which are thinner parts of the body section 22 extended over the entire axial directional length of the body section 22, instead of the hinge elements. The creases 38 serve as the joint portions 38 that join the plate-like portions 26, into which the body section is divided, while permitting them to turn. The core member 12 shown in Fig. 12(a) has the body section 22 composed of the plate-like portions 26 that are shaped like the trisections of a hollow regular triangular prism divided at the apices. The body section 22 is completed by assembling the adjoining plate-like portions 26, which constitute the hollow regular triangular prism, while permitting them to turn along the creases 38. The core member 12 shown in Fig. 12(b) has the body section 22 composed of the plate-like portions 26 that are shaped like six equal parts of a hollow regular hexagonal prism divided at the apices. The body section 22 is completed by assembling the adjoining plate-like portions 26, which constitute the regular hexagonal prism, while permitting them to turn along the creases 38. In either of the core members 12, the plate-like portions are substantially shaped like flat plates with the body section developed. Therefore, a die assembly can be made as simple as possible. As illustrated, the plate-like portions are readily folded along the creases 38 and thus assembled. This leads to the improved rigidity of the plate-like portions 26.

Furthermore, either of the core members 12 has ribs 42 formed as reinforcing portions that help hold the plate-like portions 26 in the hollow cylindrical form against an external force. Herein, the ribs 42 are formed on the edges of the engagable end faces 26a of the plate-like portions 26. The ribs 42 project on the inner surface of the body section 22 completed in the hollow cylindrical form, and have such a shape and dimensions that locally increase the wall thickness of the body section 22 at the apices thereof. This structure ensures the core member 12 high rigidity permitting the core member 12, which is inserted in the seal region 18 of the elastic tube member 16 included in the cold shrink tube unit 10, to withstand a compressing force, which is applied inward in radial directions by the seal region 18, over a period of time. As illustrated, the concave part 34 and convex part 36 should be formed in one pair of engagable end faces 26a of the plate-like portions 26 that are located at both ends of the development of the body section 22. This is advantageous in relatively positioning the plate-like portions 26.

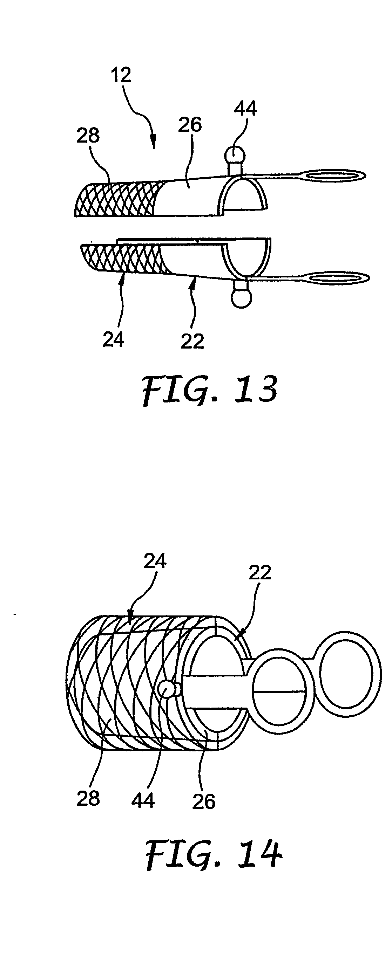

The body section 22 of the core member 12 included in the aforesaid embodiment of the present invention may have either of the foregoing structure having the plate-like portions completely separated from each other and the foregoing structure having the plate-like portions joined. Nevertheless, there is a fear that the sliding section 24 may spontaneously exert the sliding ability to cause the body section 22 to come out of the seal region 18 because of the compressing force that is applied inward in radial directions by the seal region 18 with the core member 12 inserted in the seal region 18 of the elastic tube member 16 included in the cold shrink tube unit 10. In efforts to eliminate the fear, the core member 12 advantageously includes, as shown in Fig. 13 and Fig. 14, fastening sections 44. The fastening sections 44 lock the sliding section 24, which is turned over to lie on the outer circumferential surface of the body section 22, on the outer circumferential surface of the body section 22 but also permit the sliding section 24 to be unlocked.

In the illustrated example, the fastening sections 44 are realized with projections erected in radial directions near the roots of the pull tabs 32 on the peripheries of the plate-like portions 26 included in the body section 22. By the way, each structural part 28 included in the sliding section 24 is held turned over so that it will stay on the outer circumferential surface of the associated plate-like portion 26, which is included in the body section 22. For this purpose, the fastening section 44 may be fitted into a desired one of through holes constituting a porous structure or the fastening section 44 may be locked in a locking-only notch or a hook.

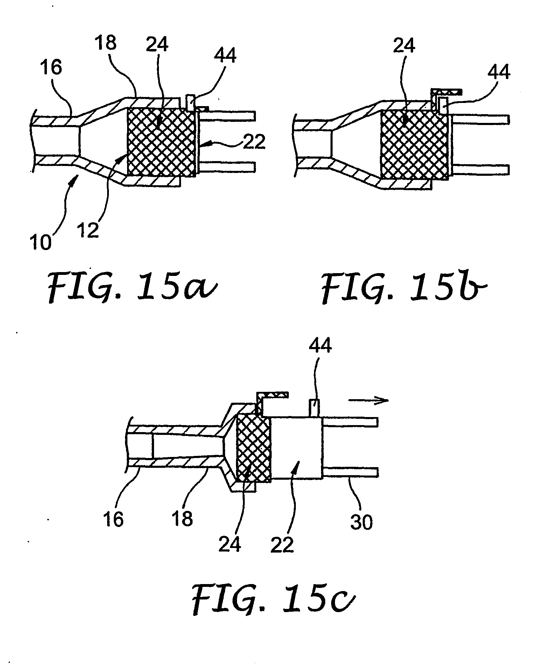

The foregoing core member 12 with the fastening sections inclusive is inserted in the seal region 18 of the elastic tube member 16 included in the cold shrink tube unit 10 with the sliding section 24 locked on the outer circumferential surface of the body section 22. This makes the sliding section 24 immovable relatively to the body section 22. Consequently, the body section 22 can be reliably held in the seal region 18 against a compressing force applied inward in radial directions by the seal region 18 (see Fig. 15(a)). In order to remove the core member 12 from the seal region 18 of the elastic tube member 16, first, the sliding section 24 is freed from the fastening sections 44 (Fig. 15(b)). Thereafter, the pull tabs 30 are pulled in the same manner as they are normally (Fig. 15(c)). Thus, the core member 12 can be readily removed from the seal region 18.

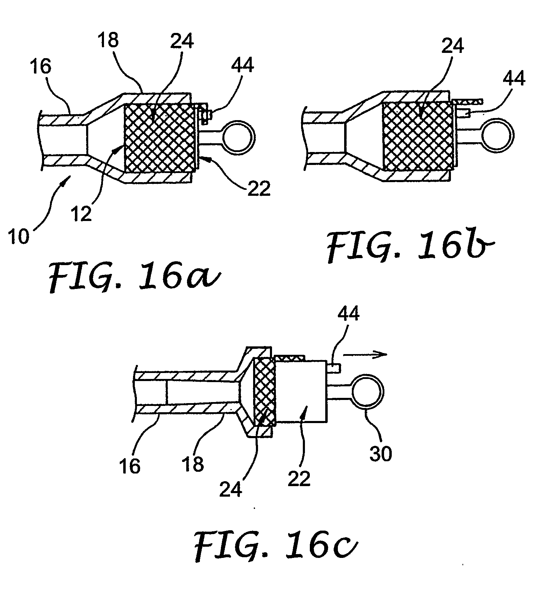

As shown in Fig. 16(a) to Fig. 16(c), the fastening sections 44 may be realized with projections that are erected outward in radial directions at desired positions on one axial end surface of the body section 22. Even in this case, similarly to the structure shown in Fig. 15, the body section 22 can be reliably held in the seal region 18 against a compressing force applied inward in radial directions by the seal region 18. As for removal, the core member 12 can be readily removed by freeing the sliding section 24 from the fastening sections 44.

The preferred embodiments of the present invention has been described so far. However, the present invention is not limited to the illustrated embodiments. Various variations and modifications can be made within the scope of the present invention defined with the contents of claims. For example, the slidingly detachable core member in accordance with the present invention can be adapted to a cold shrink tube unit having a core member inserted over the entire length of an elastic tube member (that is, the seal region is provided over the entire length of the elastic tube member). Needless to say, the present invention can be implemented in a cold shrink tube unit shaped like a branch pipe. The present invention can be adapted to a cold shrink tube unit (see JP-A-10-42447) in which an inner layer element is inserted in a seal region of an elastic tube member on a stationary basis in efforts to improve the sealing ability of the seal region. Herein, the inner layer element is shaped like a hollow cylinder and made of an elastomer different from the elastic tube member.

### [Effects of the Invention]

As apparent from the above description, according to the present invention, a core member of a slidingly detachable form has a sliding section integrated with a body section. Rigidity permitting the body section to hold a seal region of an elastic tube member, which is applied to an object to be sheathed, in a predetermined expanded state can be readily ensured without impairment of the sliding facilitating ability of the sliding section that helps the body section slide within the seal region. Moreover, assembling of components of a cold shrink tube unit having the slidingly detachable core member can be simplified. Moreover, a core member rigid enough to hold the seal region of the elastic tube member in the predetermined expanded state can be included in the cold shrink tube unit without impairment of efficiency in mounting the elastic tube member on the object to be sheathed.

## Claims

1. A slidingly detachable core member comprising
- a body section (22) defining a hollow cylinder and
- a sliding section integrally (24) connected with one axial end of said body section (22), said sliding section (24) having flexibility permitting it to be turned over and laid on an outer circumferential surface of said body section (22),
**characterized in that**
- said body section (22) includes a plurality of plate-like portions (26) capable of being combined with each other to form said hollow cylinder, and
- each of said plate-like portions is individually provided with said sliding section (24) in an adjacent manner.

2. A slidingly detachable core member according to claim 1, wherein said plate-like portions (26) comprise mutually independent parts.

3. A slidingly detachable core member according to claim 1 or 2, wherein said body section (22) further includes a joint portion (38) pivotably connecting said plate-like portions (26) with each other, said plate-like portions (26) mutually adjoining in a form of said hollow cylinder.

4. A slidingly detachable core member according to claim 3, wherein said joint portion (38) is structured to deform under an external force to allow said mutually adjoining plate-like portions (26) to be pivoted.

5. A slidingly detachable core member according to any one of claims 1 to 4, wherein said plate-like portions (26) are respectively provided with engagable end faces (26a) capable of being engaged with each other in a form of said hollow cylinder and wherein said body section (22) further includes reinforcing portions formed in peripheral end regions, including said engagable end faces (26a), of said plate-like portions (26) for holding said plate-like portions in a form of said hollow cylinder against an external force.

6. A slidingly detachable core member according to claim 5, wherein said reinforcing portions (34,36) are formed in said engagable end faces (36a), adapted to be engaged with each other, of said mutually adjoining plate-like portions (26), and respectively include concave and convex configurations detachably fitted with each other.

7. A slidingly detachable core member according to any one of claims 1 to 6, further comprising fastening sections (44) releasably fastening said sliding section (24), when turned over and laid on said outer circumferential surface of said body section (22), on said outer circumferential surface.

8. A cold shrink tube unit comprising
- an elastic tube member (16) with an opening end (14), and
- a hollow cylindrical core member (12) removably provided inside a seal region (18) of said elastic tube member (16), having a predetermined length from said opening end (14), to hold said seal region (18) in an elastically expanded state,
**characterized in that**
- said core member (12) comprises said slidingly detachable core member as set forth in any one of claims 1 to 7, and
- said slidingly detachable core member (12) is provided inside said seal region (18) with said sliding section (24) turned over and laid on said outer circumferential surface of said body section (22) and interposed between said body section (22) and said seal region (18) of said elastic tube member (16).

## Patentansprüche

1. Gleitfähiges abnehmbares Kernelement mit:
- einem Körperteilabschnitt (22), der einen Hohlzylinder definiert, und
- einem gleitfähigen Abschnitt (24), der fest mit einem Axialende des Körperteilabschnitts (22) verbunden ist, wobei der gleitfähige Abschnitt (24) Flexibilität aufweist, die es ihm ermöglicht, umgestülpt zu werden und auf eine äußere Umfangsfläche des Körperteilabschnitts (22) gelegt zu werden,
**dadurch gekennzeichnet, dass**
- der Körperteilabschnitt (22) mehrere plattenähnliche Abschnitte (26) aufweist, die miteinander kombinierbar sind, um den Hohlzylinder zu bilden, und
- jeder der plattenähnlichen Abschnitte benachbart zu dem gleitfähigen Abschnitt (24) einzeln vorgesehen ist.

2. Gleitfähiges abnehmbares Kernelement nach Anspruch 1, wobei die plattenähnlichen Abschnitte (26) voneinander unabhängige Teile aufweisen.

3. Gleitfähiges abnehmbares Kernelement nach Anspruch 1 oder 2, wobei der Körperteilabschnitt (22) ferner einen Verbindungsabschnitt (38) aufweist, der drehbar die plattenähnlichen Abschnitte (26) miteinander verbindet, wobei die plattenähnlichen Abschnitte (26) aneinander anliegen, und zwar in Form des Hohlzylinders.

4. Gleitfähiges abnehmbares Kernelement nach Anspruch 3, wobei der Verbindungsabschnitt (38) derart strukturiert ist, dass er unter einer äußeren Kraftgröße verformbar ist, damit die aneinander anliegenden plattenähnlichen Abschnitte (26) geschwenkt werden können.

5. Gleitfähiges abnehmbares Kernelement nach einem der Ansprüche 1 bis 4, wobei die plattenähnlichen Abschnitte (26) jeweils mit eingreifbaren Endflächen (26a) ausgestattet sind, die miteinander im Eingriff sind, wenn sie den Hohlzylinder bilden, und wobei der Körperteilabschnitt (22) ferner Verstärkungsabschnitte aufweist, die in die eingreifbaren Endflächen (26a) aufweisenden Umfangsendbereichen der plattenähnlichen Abschnitte (26) zum Halten der plattenähnlichen Abschnitte gegen eine äußere Kraftgröße ausgebildet sind, und zwar in Form des Hohlzylinders.

6. Gleitfähiges abnehmbares Kernelement nach Anspruch 5, wobei die Verstärkungsabschnitte (34, 36) in den für den Eingriff miteinander geeigneten Endflächen (36a) der gegenseitig aneinandergrenzenden plattenähnlichen Abschnitte (26) ausgebildet sind und jeweils hohle und konvexe Konfigurationen aufweisen, die lösbar ineinander passen.

7. Gleitfähiges abnehmbares Kernelement nach einem der Ansprüche 1 bis 6, ferner aufweisend Befestigungsteilabschnitte (44), die den gleitfähigen Abschnitt (24), wenn sie umgestülpt und auf die äußere Umfangsfläche des Körperteilabschnitts (22) umgelegt sind, lösbar auf der äußeren Umfangsfläche befestigen.

8. Kaltschrumpfrohrvorrichtung mit
- einem elastischen Rohrelement (16) mit einem Öffnungsende (14) und
- einem hohlzylindrischen Kernelement (12), das entfernbar innerhalb eines Dichtungsbereichs (18) des elastischen Rohrelements (16) vorgesehen ist, wobei sich der Dichtungsbereich (18) über eine bestimmte vorgegebene Länge von dem Öffnungsende (14) erstreckt, und das Kernelement den Dichtungsbereich (18) in einem elastisch aufgeweiteten Zustand belässt,
**gekennzeichnet dadurch, dass**
- das Kernelement (12) das gleitfähig abnehmbare Kernelement, so wie in einem der Ansprüche 1 bis 7 dargelegt, aufweist und
- das gleitfähig abnehmbare Kernelement (12) innerhalb des Dichtungsbereichs (18) vorgesehen ist, wobei der gleitfähige Abschnitt (24) umgestülpt und auf die äußere Umfangsfläche des Körperteilabschnitts (22) gelegt und zwischen dem Körperteilabschnitt (22) und dem Dichtungsbereich (18) des elastischen Rohrelements (16) angeordnet ist.

## Revendications

1. Elément d'âme détachable par coulissement, qui comprend :
- une partie de corps (22) qui définit un cylindre creux et
- une partie coulissante (24) reliée d'un seul tenant à une extrémité axiale de ladite partie de corps (22), ladite partie coulissante (24) ayant une flexibilité qui lui permet d'être retournée et placée au-dessus d'une surface périphérique extérieure de ladite partie de corps (22),
**caractérisé en ce que**
- ladite partie de corps (22) comprend plusieurs parties (26) en forme de plaque qui peuvent être combinées les unes avec les autres pour former ledit cylindre creux et **en ce que**
- chacune desdites parties en forme de plaque est dotée individuellement de ladite partie coulissante (24) de manière adjacente.

2. Elément d'âme détachable par coulissement selon la revendication 1, dans lequel lesdites parties (26) en forme de plaque présentent des parties mutuellement indépendantes.

3. Elément d'âme détachable par coulissement selon la revendication 1 ou 2, dans lequel ladite partie de corps (22) comprend en outre une partie de jonction (38) qui relie à pivotement lesdites parties (26) en forme de plaque les unes aux autres, lesdites parties (26) en forme de plaque se rejoignant les unes les autres pour former ledit cylindre creux.

4. Elément d'âme détachable par coulissement selon la revendication 3, dans lequel ladite partie de jonction (38) est structurée de manière à se déformer sous l'action d'une force extérieure pour permettre de faire pivoter lesdites parties (26) en forme de plaque mutuellement adjacentes.

5. Elément d'âme détachable par coulissement selon l'une quelconque des revendications 1 à 4, dans lequel lesdites parties (26) en forme de plaque sont toutes dotées de surfaces d'extrémité engageables (26a) qui peuvent s'engager l'une avec l'autre pour former ledit cylindre creux et dans lequel ladite partie de corps (22) comprend en outre des parties de renfort formées dans des zones périphériques d'extrémité qui comprennent lesdites parties d'extrémité engageables (26a) desdites parties (26) en forme de plaque pour maintenir lesdites parties en forme de plaque dans la forme dudit cylindre creux lors de l'application d'une force extérieure.

6. Elément d'âme détachable par coulissement selon la revendication 5, dans lequel lesdites parties de renfort (34, 36) sont formées dans lesdites faces d'extrémité engageables (36a), adaptées de manière à pouvoir s'engager l'une avec l'autre, desdites parties (26) en forme de plaque mutuellement adjacentes et ont respectivement une configuration concave et une configuration convexe reliées l'une à l'autre de manière détachable.

7. Elément d'âme détachable par coulissement selon l'une quelconque des revendications 1 à 6, qui comprend en outre des parties de fixation (44) qui relient de manière libérable ladite partie coulissante (24) lorsqu'elle est retournée et placée au-dessus de ladite surface périphérique extérieure de ladite partie de corps (22) sur ladite surface périphérique extérieure.

8. Unité tubulaire rétractable à froid, qui comprend :
- un élément élastique tubulaire (16) doté d'une extrémité ouverte (14) et
- un élément d'âme cylindrique creux (12) prévu de manière libérable à l'intérieur d'une zone de scellement (18) dudit élément élastique tubulaire (16), qui présente une longueur prédéterminée partant de ladite extrémité ouverte (14) de manière à maintenir ladite zone de scellement (18) dans un état élastiquement dilaté,
**caractérisée en ce que**
- ledit élément d'âme (12) comprend ledit élément d'âme détachable par coulissement défini dans une quelconque des revendications 1 à 7 et
- ledit élément (12) d'âme détachable par coulissement est prévu à l'intérieur de ladite région de scellement (18), ladite partie coulissante (24) étant retournée et placée au-dessus de ladite surface périphérique extérieure de ladite partie de corps (22) et étant intercalée entre ladite partie de corps (22) et ladite zone de scellement (18) dudit élément élastique tubulaire (16).
